# EUROPEAN PATENT APPLICATION

(11) **EP 4 826 935 A1**
(43) Date of publication of application: **21.10.2026**
(21) Application number: 26170360.7
(22) Date of filing: 02.04.2026
(51) Int. Cl.: H02H 9/04

(54) **PROTECTION CIRCUIT AND ELECTRONIC DEVICE**

(30) Priority: 08.04.2025 JP 2025063786
(71) Applicant: KYOCERA Document Solutions Inc., Osaka-shi, Osaka 540-8585 (JP)
(72) Inventor: PHAN, DOAN HUU, Osaka 540-8585 (JP)
(74) Representative: Becker Kurig & Partner Patentanwälte mbB

(57) **Abstract**

A protection circuit includes two resistors and a Zener diode. The two resistors are connected in series. The Zener diode has a cathode connected between the two resistors and an anode grounded.

## Description

### BACKGROUND

The present disclosure relates to a protection circuit and an electronic device.

Electrostatic breakdown in which electronic components incorporated in an electronic device such as an image forming apparatus are damaged by electrostatic discharge is known. Therefore, countermeasures against electrostatic breakdown have been studied. For example, an embedded board has one or more semiconductor integrated circuit devices for realizing a desired circuit function and an ESD (Electrostatic Discharge) detection circuit. The ESD detection circuit includes a detection circuit for detecting that a voltage equal to or higher than the upper limit of the operation voltage of the semiconductor integrated circuit device is generated in the operation power supply line of the semiconductor integrated circuit device. In addition, the ESD detection circuit includes a counter circuit for counting detection signals output from the detection circuit, and a battery for supplying an operation voltage to the detection circuit and the counter circuit.

### SUMMARY

A protection circuit according to the present disclosure includes two resistors and a Zener diode. The two resistors are connected in series. The Zener diode has a cathode connected between the two resistors and an anode grounded.

An electronic device according to the present disclosure includes a driver, a central processing unit

(CPU), and the protection circuit. The driver is configured to drive a load. The CPU is configured to control the driver. The protection circuit is provided between the driver and the CPU.

### BRIEF DESCRIPTION OF THE DRAWINGS

FIG. 1 is a perspective view showing an appearance of an image forming system according to an embodiment of the present disclosure.
FIG. 2 is a front view schematically showing configurations of a document conveying device and a document reading device according to the embodiment of the present disclosure.
FIG. 3 is a right side view schematically showing a configuration of a printing device according to the embodiment of the present disclosure.
FIG. 4 is a circuit diagram showing a circuit in which a static electricity countermeasure is not taken.
FIG. 5 is a circuit diagram showing a circuit in which a static electricity countermeasure, according to the embodiment of the present disclosure, is taken.
FIG. 6 is a circuit diagram showing a circuit in which a static electricity countermeasure, according to a second modified example of the embodiment of the present disclosure, is taken.

### DETAILED DESCRIPTION

<Embodiment> Hereinafter, with reference to the attached drawings, an image forming system 100 according to an embodiment of the present disclosure will be described.

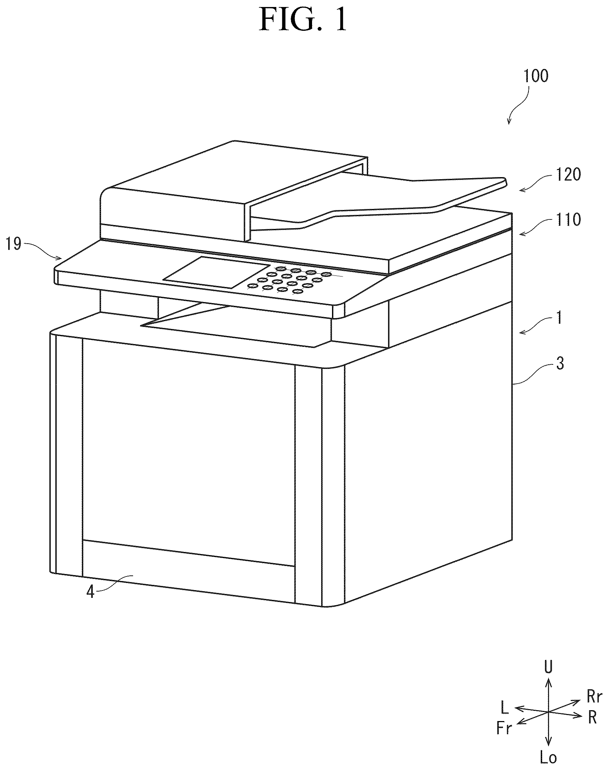

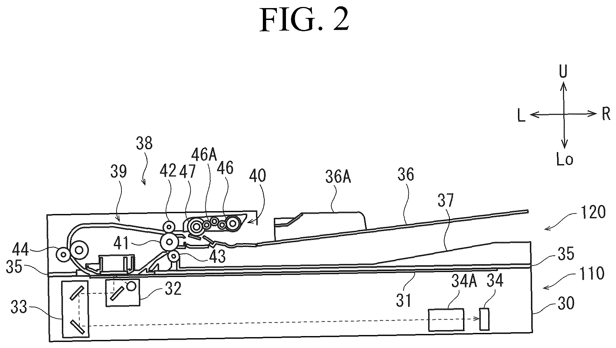

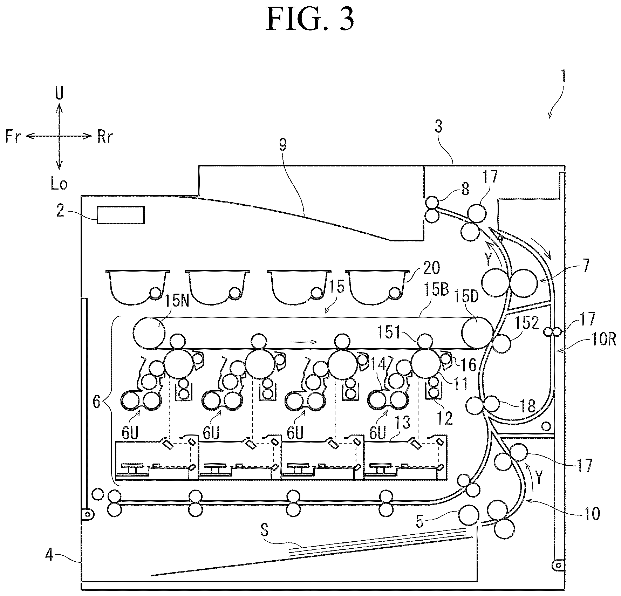

FIG. 1 is a perspective view showing an appearance of the image forming system 100. FIG. 2 is a front view schematically showing configurations of a document conveying device 120 and a document reading device 110. FIG. 3 is a right side view schematically showing a configuration of the printing device 1. In each figure, U, Lo, L, R, Fr, and Rr indicate the upper, lower, left, right, front, and rear, respectively. These directions are determined only for convenience of explanation.

The image forming system 100 (see FIG. 1) includes the printing device 1, the document reading device 110, and the document conveying device 120. The document reading device 110 is provided above the printing device 1, and the document conveying device 120 is provided above the document reading device 110. The document conveying device 120 conveys a document via a reading position of the document reading device 110. The document reading device 110 is a flatbed type image scanner and reads the document to generate image data. The printing device 1 forms an image based on the image data on a sheet S.

[Printing device] The printing device 1 (see FIG. 3) includes a rectangular parallelepiped body housing 3. In the lower portion of the inside of the body housing 3, a sheet feeding cassette 4 in which a sheet S is stored and a sheet feeding roller 5 which feeds the sheet S rearward from the sheet feeding cassette 4 are provided. Above the sheet feeding cassette 4, an image forming device 6 which forms a toner image by an electrophotographic method is provided, and a fixing device 7 which fixes the toner image to the sheet S is provided above and on the rear side of the image forming device 6. Above the fixing device 7, a discharge roller 8 which discharges the sheet S on which the toner image is fixed and a discharge tray 9 on which the discharged sheet S is stacked are provided.

Inside the body housing 3, a conveying path 10 is provided from the sheet feeding roller 5 through the image forming device 6 and the fixing device 7 to the discharge roller 8. The conveying path 10 is formed mainly of plate-like members facing each other with a gap for passing the sheet S, and conveying rollers 17 for holding and conveying the sheet S are provided at a plurality of positions in the conveying direction Y. A registration roller 18 is provided on the upstream side of the image forming device 6 in the conveying direction Y. An inversion conveying path 10R is provided on the rear side of the fixing device 7. The inversion conveying path 10R branches from the conveying path 10 at a branch point positioned on the downstream side of the fixing device 7 in the conveying direction Y, and merges with the conveying path 10 at a merging point positioned on the upstream side of the registration roller 18 in the conveying direction Y.

The image forming device 6 includes an intermediate transfer unit 15 and four image forming units 6U. The image forming unit 6U is provided with a photosensitive drum 11 whose potential changes by irradiation with light, a charging device 12 which charges the photosensitive drum 11, and an exposure device 13 which emits a laser beam corresponding to image data. Further, the image forming unit 6U is provided with a developing device 14 which supplies toner to the photosensitive drum 11 and a cleaning device 16 which removes the toner remaining on the photosensitive drum 11. The intermediate transfer unit 15 is provided with an endless intermediate transfer belt 15B wound around a driving roller 15D and a driven roller 15N, and primary transfer rollers 151 which face the inner peripheral surface of the intermediate transfer belt 15B at positions corresponding to the photosensitive drums 11 and generate a primary transfer bias. Further, the intermediate transfer unit 15 is provided with a secondary transfer roller 152 which faces the outer peripheral surface of the intermediate transfer belt 15B at a position corresponding to the driving roller 15D and generates a secondary transfer bias. A toner container 20 which supplies the toner to the developing device 14 is connected to the developing device 14. The image forming device 6 forms a color image by superposing toner images of four colors on the intermediate transfer belt 15B. The printing device 1 may include two, three, or five or more image forming units 6U.

[Document reading device] The document reading device 110 (see FIG. 2) includes a rectangular parallelepiped housing 30, a first carriage 32 including a light source and a reflecting mirror, and a second carriage 33 including two reflecting mirrors. The document reading device 110 includes a lens 34A for forming an image, an imaging element 34 for converting the formed image into image data, and a contact glass 31 on which the document is placed. The contact glass 31 is provided on the upper surface of the housing 30.

[Document conveying device] The document conveying device 120 (see FIG. 2) includes a generally rectangular bottom plate 35 formed in a flat shape. The rear end portion of the bottom plate 35 is coupled to the rear portion of the contact glass 31 via a hinge (not shown) on the upper surface of the housing 30, and the bottom plate 35 is openable and closable around the hinge. The bottom plate 35 has a function of supporting each part of the document conveying device 120 and a function of pressing the document on the contact glass 31.

The document conveying device 120 includes a sheet feeding tray 36, a conveying part 38, and a discharge tray 37. The sheet feeding tray 36 is provided from the vicinity of the center to the right end portion of the document conveying device 120. The sheet feeding tray 36 is inclined such that the left side is lower, and is provided with a cursor 36A for aligning the front and rear ends of the document. The discharge tray 37 is provided below the sheet feeding tray 36. The discharge tray 37 is inclined such that the left side is lower.

[Conveying Part] The conveying part 38 includes a feeding part 40, a driving roller 41, a supply roller 42, a discharge roller 43, and a conveying path 39. The feeding part 40 is disposed above and to the left of the left end portion of the sheet feeding tray 36 and near the center of the sheet feeding tray 36 in the front-and-rear direction. The driving roller 41, the supply roller 42 and the discharge roller 43 are disposed such that their axial directions are along the front-and-rear direction. The driving roller 41 is disposed below and to the left of the feeding part 40. The supply roller 42 is disposed above the driving roller 41. The discharge roller 43 is disposed below the driving roller 41. The supply roller 42 and the discharge roller 43 are in contact with the driving roller 41. The driving roller 41 is driven by a driving force transmitted from a motor (not shown) through a gear train (not shown), and the supply roller 42 and the discharge roller 43 follow the driving roller 41.

The conveying path 39 is provided leftward from the contact area between the supply roller 42 and the driving roller 41, turns downward, and reaches the discharge roller 43 by passing above the first carriage 32 positioned at the home position. On the conveying path 39, one or more conveying rollers 44 whose axial directions are along the front-and-rear direction are provided.

[Feeding Part] The feeding part 40 is disposed near the center of the conveying path 39 in the front-and-rear direction. The feeding part 40 includes a feeding roller 46 and a separation roller 47 provided on the left side of the feeding roller 46. The separation roller 47 is driven by a driving force transmitted from a motor (not shown) through a gear train (not shown). The feeding roller 46 is driven by a driving force transmitted from the separation roller 47 through the gear train 46A.

[Control Part] A control part 2 includes an arithmetic part and a storage part (not shown). The arithmetic part is, for example, a CPU (Central Processing Unit). The storage part includes a storage medium such as ROM (Read Only Memory), RAM (Random Access Memory), and EEPROM (Electrically Erasable Programmable Read Only Memory). The arithmetic part executes various processes by reading and executing the control program stored in the storage part. The control part 2 may be realized only by an integrated circuit without using software.

[Display Operation Part] A display operation part 19 is provided on the front side of the document reading device 110. The display operation part 19 includes a display panel, a touch panel superposed on the display surface of the display panel, and a keypad. The control part 2 causes the display panel to display a screen showing an operation menu, a status, and the like of the printing device 1 and the document reading device 110, and controls each part of the printing device 1 and the document reading device 110 according to an operation detected by the touch panel and the keypad.

[Operation] The basic operation of the image forming system 100 is as follows. When a user places a document on the upper surface of the contact glass 31 and instructs the document reading device 110 to read the document, the second carriage 33 moves rightward at a speed v/2 in conjunction with the rightward movement of the first carriage 32 at a speed v. In the meantime, the light source of the first carriage 32 irradiates the document with light, and the reflected light reflected by the document is reflected by the reflecting mirror of the first carriage 32 and the reflecting mirrors of the second carriage 33, guided to the lens 34A, formed as an image on the imaging element 34, and converted into an image signal. The image signal is output to the control part 2 of the printing device 1 and converted into image data.

On the other hand, when the user places the documents on the sheet feeding tray 36 and instructs the document reading device 110 to read the documents, the feeding roller 46 is driven to feed the documents one by one onto the conveying path 39. The document is conveyed along the conveying path 39 and discharged to the discharge tray 37. In the meantime, the light source of the first carriage 32 irradiates the document with light, and the reflected light reflected by the document is reflected by the reflecting mirror of the first carriage 32 and the reflecting mirrors of the second carriage 33, guided to the lens 34A, formed as an image on the imaging element 34, and converted into an image signal. The image signal is output to the control part 2 of the printing device 1 and converted into image data.

In the printing device 1, the sheet feeding roller 5 feeds the sheet S from the sheet feeding cassette 4 to the conveying path 10, the registration roller 18 whose rotation is stopped corrects the posture of the sheet S, and the registration roller 18 feeds the sheet S to the image forming device 6 at a predetermined timing. In the image forming device 6, the charging device 12 charges the photosensitive drum 11 to a predetermined potential, the exposure device 13 writes an electrostatic latent image on the photosensitive drum 11, and the developing device 14 forms a toner image by developing the electrostatic latent image using the toner supplied from the toner container 20. In the image forming device 6, the primary transfer roller 151 transfers the toner image to the intermediate transfer belt 15B, and the secondary transfer roller 152 transfers the toner image to the sheet S.

Subsequently, the fixing device 7 fuses the toner image while holding and conveying the sheet S to fix the toner image to the sheet S, and the discharge roller 8 discharges the sheet S to the discharge tray 9. In the case of double-sided printing, the sheet S having the toner image fixed on the first surface is fed to the conveying path 10 via the inversion conveying path 10R, whereby the toner image is transferred to the second surface.

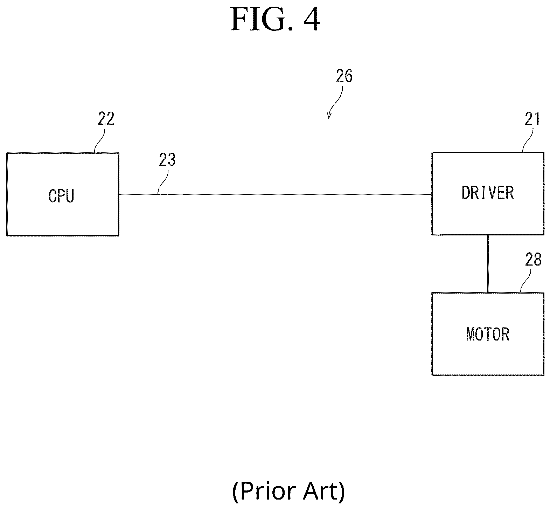

[Static Electricity Countermeasure] FIG. 4 is a circuit diagram showing a circuit 26 in which a static electricity countermeasure is not taken. The image forming system 100 (an example of an electronic device) is provided with a driver 21 for driving a motor 28 (an example of a load) for rotating the photosensitive drum 11, the developing device 14, the fixing device 7, the driving roller 41, or the like, and a CPU 22 (Central Processing Unit) for controlling the driver 21. However, when static electricity is discharged to a signal line 23 connecting the CPU 22 and the driver 21 during assembly in a factory, the CPU 22 may be damaged by electrostatic discharge.

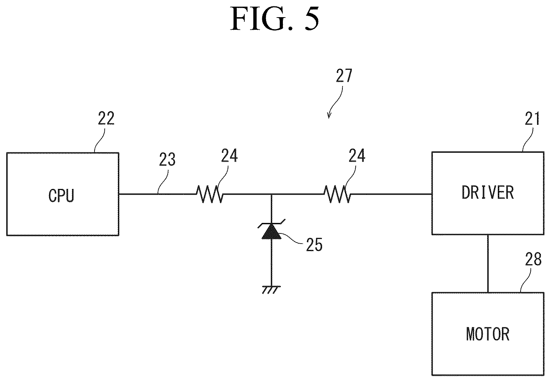

FIG. 5 is a circuit diagram showing a protection circuit 27 in which a static electricity countermeasure is taken. The CPU 22 and the driver 21 are connected by the signal line 23. Two resistors 24 are disposed in series on the signal line 23. The two resistors 24 are damping resistors, and an effect of reducing noise of a signal transmitted from the CPU 22 to the driver 21 is obtained. The cathode of one Zener diode 25 is connected between the two resistors 24. The anode of the Zener diode 25 is grounded.

In this embodiment, as an example, it is set as a criterion to be satisfied that the CPU 22 is not damaged when the static electricity of ±15[kV] is discharged to the signal line 23. When the static electricity of ±15[kV] is discharged to the signal line 23, the Zener diode 25 clamps the voltage to 5.6[V]. The voltage is dissipated through the Zener diode 25. This configuration prevents the high voltage from directly affecting other components (in this embodiment, the CPU 22 and the driver 21). In addition, the resistor 24 can be prevented from being exposed to overvoltage.

The resistor 24 limits the current flowing through the protection circuit 27. The resistor 24 has a resistance value R of 10[kΩ] and a rated power of 0.1[W]. When the voltage V is clamped to 5.6[V] by the Zener diode 25, the current I flowing through the two resistors 24 is obtained by equation (1) according to Ohm's law. $I = V / R = 5.6 \left[V\right] / 20 \left[kΩ\right] = 0.28 \left[mA\right]$ Equation (1) The power consumption P of each resistor 24 is obtained by equation (2). 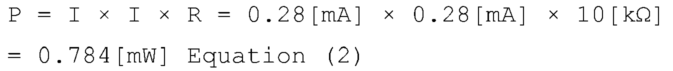 P = I × I × R = 0.28 [mA] × 0.28 [mA] ×10 [kΩ] = 0.784 [mW] Equation (2) Since the power consumption P is less than the rated power, the resistor 24 is not destroyed.

The Zener diode 25 clamps the voltage at 5.6[V] and the resistor 24 limits the current to protect the CPU 22 from high voltages and high currents. Since the voltage applied to the CPU 22 does not exceed the safe range, the CPU 22 is not damaged.

The protection circuit 27 according to the embodiment described above includes the two resistors 24 connected in series, and the Zener diode 25 having the cathode connected between the two resistors 24 and the anode grounded. According to the present embodiment, electrostatic damage to the electronic component can be prevented.

Further, the electronic device (image forming system 100) according to this embodiment includes the driver 21 which drives the load (motor 28), the CPU 22 which controls the driver 21, and the protection circuit 27 provided between the driver 21 and the CPU 22. According to the present embodiment, electrostatic damage to electronic components provided in the electronic device can be prevented.

<Modified Example 1 of Embodiment> The driver 21 may be an electronic circuit for driving the motor 28 as the load. Further, one end of the signal line 23 may be connected to the driver 21, and the other end of the signal line 23 may be connected to the CPU 22.

Further, of the two resistors 24, the resistor 24 on the CPU 22 side may be a damping resistor configured to suppress reflection of the control signal generated at one end of the signal line 23 to which the driver 21 is connected. In addition, the control signal may be an electrical signal transmitted to the driver 21 in order to control the driver 21 by the CPU 22. Further, the control signal may include a drive signal that commands the driver 21 to drive the motor 28 and a drive stop signal that commands the driver 21 to stop driving the motor 28.

Further, of the two resistors 24, the resistor 24 on the driver 21 side may be a damping resistor configured to suppress reflection of the status signal generated at the other end of the signal line 23 to which the CPU 22 is connected. The status signal may also be an electrical signal sent to the CPU 22 by the driver 21 to report the status of the motor 28 or the status of the driver 21.

In addition, the status signal may include a drive status signal that reports that the state of the motor 28 is a state in which the motor 28 is driving or that the state of the driver 21 is a state in which the driver 21 is driving the motor 28. The status signal may also include a stop status signal that reports that the state of the motor 28 is a state in which the motor 28 stops driving or that the state of the driver 21 is a state in which the driver 21 stops the motor 28 from driving.

Further, both of the two resistors 24 may be damping resistors, or one of the two resistors 24 may be a damping resistor and the other of the two resistors 24 may not be a damping resistor.

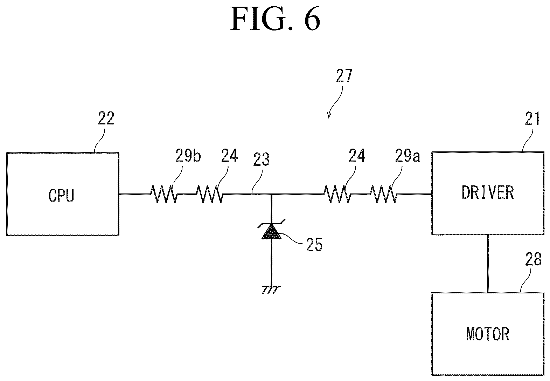

<Modified Example 2 of Embodiment> The protection circuit 27 may further include one resistor 29a connected between one end of the signal line 23 connected to the driver 21 as shown in FIG. 6 and the resistor 24 on the driver 21 side. The protection circuit 27 may further include one resistor 29b connected between the other end of the signal line 23 connected to the CPU 22 and the resistor 24 on the CPU 22 side. According to these configurations, when an electrostatic discharge to the signal line 23 occurs between the two resistors 24, the resistors 29a and 29b reduce the voltage applied to the resistor 24 by the electrostatic discharge. Therefore, since the protection circuit 27 can suppress the damage to the resistor 24 compared to conventional ones, the protection circuit 27 can suppress the damage to the CPU 22, which is connected to the signal line 23 at a position farther from the position where the electrostatic discharge occurs than the resistor 24, compared to conventional ones.

<Modified Example 3 of Embodiment> In the modified example 2 of the embodiment, it is described that the protection circuit 27 includes one resistor 29a. However, the protection circuit 27 may include two or more resistors 29a connected between one end of the signal line 23 connected to the driver 21 and the resistor 24 on the driver 21 side.

In addition, in the modified example 2 of the embodiment, it is described that the protection circuit 27 includes one resistor 29b. However, the protection circuit 27 may include two or more resistors 29b connected between the other end of the signal line 23 connected to the CPU 22 and the resistor 24 on the CPU 22 side.

Further, the protection circuit 27 may include one of at least one resistor 29a and at least one resistor 29b but need not include the other.

The above embodiment and the first to third modified examples of the embodiment can be combined with each other. Although the present disclosure has been described for specific embodiments, the present disclosure is not limited to the foregoing embodiments.

## Claims

1. A protection circuit (27) comprising:
two resistors (24) connected in series; and
a Zener diode (25) having a cathode connected between the two resistors (24) and an anode grounded.

2. The protection circuit (27) according to claim 1, further comprising a signal line (23) in which the two resistors (24) are connected in series, wherein
one of the two resistors (24) is connected to a side of one end of the signal line (23), and
the other of the two resistors (24) is connected to a side of the other end of the signal line (23) and is a damping resistor configured to suppress reflection of an electric signal generated at one end of the signal line (23).

3. The protection circuit (27) according to claim 2, wherein
the one end of the signal line (23) is connected to a driver (21) configured to drive a load,
the other end of the signal line (23) is connected to a central processing unit (CPU) (22) configured to control the driver (21), and
the electric signal, the reflection of which is suppressed by the other of the two resistors (24), is a control signal that the CPU (22) sends to the driver (21) in order to control the driver (21).

4. The protection circuit (27) according to claim 2 or 3, further comprising one or both of
at least one resistor (29a) connected between the one end of the signal line (23) and the one of the two resistors (24) and
at least one resistor (29b) connected between the other end of the signal line (23) and the other of the two resistors (24).

5. An electronic device (100) comprising:
a driver (21) configured to drive a load;
a central processing unit (CPU) (22) configured to control the driver (21); and
the protection circuit (27) according to claim 1 or 2 and provided between the driver (21) and the CPU (22).
